# EUROPEAN PATENT SPECIFICATION

(11) **EP 3 023 331 B1**
(45) Date of publication and mention of the grant of the patent: **08.11.2017**
(21) Application number: 15196006.9
(22) Date of filing: 24.11.2015
(51) Int. Cl.: B64D 33/00, B64D 41/00, F02N 11/04, F02C 3/04, F02C 7/275, H02K 19/20, H02K 1/24, H02K 7/18, H02K 19/18

(54) **AIRCRAFT ENGINE ASSEMBLY AND METHOD OF GENERATING ELECTRIC ENERGY FOR AN AIRCRAFT POWER SYSTEM**
LUFTFAHRZEUGANTRIEB UND VERFAHREN ZUR ERZEUGUNG ELEKTRISCHER ENERGIE FÜR EIN LUFTFAHRZEUGVERSORGUNGSSYSTEM
MOTEUR D'AÉRONEF ET PROCÉDÉ DE GÉNÉRATION D'ÉNERGIE ÉLECTRIQUE POUR UN SYSTÈME D'ALIMENTATION D'AVION

(30) Priority: 24.11.2014 US 201414551760
(43) Date of publication of application: 25.05.2016
(73) Proprietor: Hamilton Sundstrand Corporation, Charlotte, NC 28217 (US)
(72) Inventor: PATEL, Dhaval, Loves Park, IL Illinois 61111 (US); KOENIG, Andreas C., Rockford, IL Illinois 61114 (US); SPIERLING, Todd A., Byron, IL Illinois 61010 (US)
(74) Representative: Hughes, Andrea Michelle

(56) References cited:
- EP-A2- 1 931 015
- EP-A2- 2 169 804
- EP-A2- 2 579 449
- GB-A- 2 444 838

## Description

### BACKGROUND OF THE INVENTION

The subject matter disclosed herein relates to aircraft engines and, more particularly, to an aircraft engine having a flux-switching machine embedded therein, as well as a method of electrical power generation for an aircraft. Such an aircraft engine assembly is for example known from document GB 2 444 838, which is regarded as the closest prior art and discloses the preamble of claim 1.

With advancements of power electronics, airframe designers are pushing towards "more electric aircraft." The more electric aircraft relies on electric machine based systems to replace the traditional hydraulics, air conditioning and engine start systems in the aircraft. Traditionally, aircraft engine manufacturers and airframe designers are exploring ways to utilize electric machines to lighten the weight of the engine. One method to do this is to utilize the aircraft power generator as a starter/generator. In this system, the aircraft starter/generator is mounted on an external engine gearbox to provide torque for startup and power once the engine is running. Due to the high electrical power requirements of "more electric aircraft," these generators can be quite large and can lead to increased size requirements of the engine nacelles and hence increased aircraft drag and overall fuel efficiency impacts.

To reduce the external size of the engine nacelles by eliminating the gearbox and external generator, it may be desirable to embed the generators into the engine. Several issues persist with embedding a generator into the core of an engine. The main problems with this approach is that the engine environment is extreme with respect to temperature, vibration, and rotational speed ranges and the reliability requirements of the engine and any embedded components are high. Such generators include a design dictated by speed and as a result have to be variable speed for speed ranges which are dependent on which spool the generator is embedded in. The low pressure spool typical speed range is 4:1 or 5:1, whereas the high pressure spool is 1:2. In some applications the engine includes an intermediate pressure spool which is optimized to link the low and high pressure spool, resulting in a speed range that is between the two spools it is linking. The bulk of aircraft generators are three stage wound field synchronous machines. As a result of the speed range of the rotor, packaging can become complex and the material selection is limited due to the environment of the engine core. Wound field synchronous machines require packaging space for three stages, with the second two stages required to be in close proximity. Additionally, such machines require packaging and cooling of a rotating rectifier.

In an attempt to simplify the machine described above, several topologies have been proposed. A permanent magnet machine includes magnets that cannot be turned off, leading to a design that is not fault tolerant. The power output is dictated by speed, based on the fact that the machine is sized for lower speed operation and will have an overabundance of power at high speed. Due to fixed power magnets acting as the field, the system requires sizing at minimum speed, which results in a larger package. Finally, the permanent magnet machine requires structural support for magnet retention.

A controllable permanent magnet machine has a lower power density than a permanent magnet machine due to winding architecture and the ability to control a fault is dictated by the size of the control winding and the amount of power available to the control winding. The magnets are not truly turned off, resulting in a heating impact to the system when the control winding is active, particularly during a fault. The rotor requires structural support for magnet retention and reliability is a concern.

A switch reluctance machine provides a simple rotor construction enabling high speed and high temperature operation, but requires a significant amount of power conditioning including power electronics and output power filtering which adds weight to the generation system. The machine output is direct current (DC) and for alternating current (AC) systems additional power electronics is required. Additionally, an excitation source is required.

An induction machine also provides a simple rotor construction although with lower temperature and speed capability than switched reluctance machines, but still requires an excitation source and significant power conditioning, though typically lower weight than the switched reluctance machine.

These are examples of machines used as a generator for an aircraft power system in an effort to make the engine "more electric." Unfortunately, as detailed above, all of the above-described machines have associated drawbacks that make their use problematic.

### BRIEF DESCRIPTION OF THE INVENTION

According to one aspect of the invention, an aircraft engine assembly includes the features of independent claim 1.

According to another aspect of the invention, a method of generating electric energy for an aircraft power system according to independent claim 7 is provided.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a cross-sectional view of an aircraft engine; and
FIG. 2 is a sectional view of a three phase flux-switching machine for embedding within the aircraft engine.

The detailed description explains embodiments of the invention, together with advantages and features, by way of example with reference to the drawings.

### DETAILED DESCRIPTION OF THE INVENTION

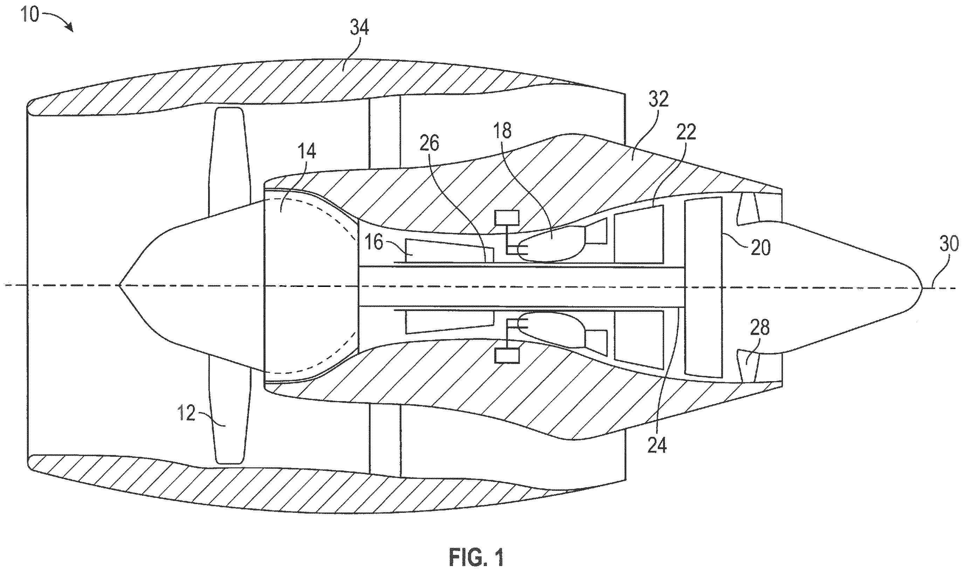

Referring to FIG. 1, an aircraft engine 10 of the gas turbine type includes a fan 12, a low pressure compressor 14, a high pressure compressor 16, a combustor 18, a low pressure turbine 20, a high pressure turbine 22, a low pressure spool 24, a high pressure spool 26, and a nozzle 28. Each compressor and turbine section 14, 16, 20, 22 include a plurality of stator vane stages and rotor stages. Each stator vane stage includes a plurality of stator vanes that guide air into or out of a rotor stage in a manner designed in part to optimize performance of that rotor stage. Each rotor stage includes a plurality of rotor blades attached to a rotor disk. The low pressure spool 24 extends between, and is connected with, the low pressure compressor 14 and the low pressure turbine 20. The high pressure spool 26 extends between, and is connected with, the high pressure compressor 16 and the high pressure turbine 22. The low pressure spool 24 and the high pressure spool 26 are concentric and rotatable about the longitudinally extending axis 30 of the engine.

The spools 24, 26 are supported within the engine 10 by one or more stationary structural frames, such as a strut, and bearings. The structural frames are disposed around the center axis 30 of the engine 10. The structural support members are operatively coupled to an engine housing 32 that surrounds the main components of the aircraft engine 10. The engine housing 32 is disposed within and coupled to a further outer housing, referred to as a nacelle 34.

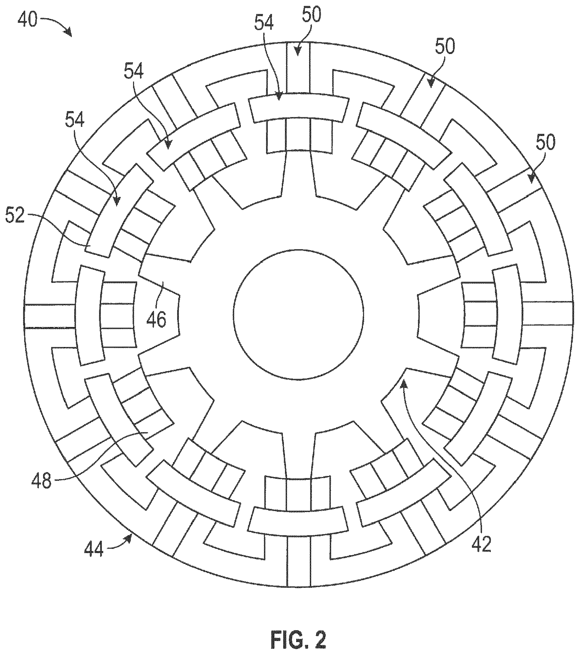

Referring to FIG. 2, illustrated is a schematic plan view of a flux-switching machine 40 that is disposed within the engine housing 32 of the aircraft engine 10. In one embodiment, the flux-switching machine 40 is disposed entirely within the engine housing 32, thereby defining a fully embedded machine within the engine housing 32. In other embodiments, the flux-switching machine 40 may be partially embedded. More precise locations of the flux-switching machine 40 are described below.

The flux-switching machine 40 is a brushless machine having a rotor 42 and a stator 44. The rotor 42 and the stator 44 each have respective teeth 46, 48 (also referred to herein as poles). The rotor 42 and the stator 44 have different numbers of poles, and therefore for any orientation of the rotor 42 relative to the stator 44, certain ones of the rotor poles 46 are offset relative to the closest stator pole 52. The rotor 42 is formed of electrical steel and the stator includes two winding sets. The center of each stator pole 52 48 each includes a field winding set 50 between stator teeth 48. The field winding 50 is excited such that it creates an electromagnet which magnetizes so that polarities of each electromagnet alternate circumferentially around the stator 44. The electromagnetic field created by the field winding 50 is variable based on the excitation level applied. In some embodiments of the invention, the field winding set 50, can be replaced with magnets, where the electromagnetic field created by the magnet is fixed.

Armature windings 52 are wound around each of the stator teeth 48 to form an armature winding set 54. Each armature winding 52 belongs to one of three phases, each set of armature windings having four armature windings 52 that are circumferentially-spaced at intervals and that are configured to carry alternating current for the same phase. Armature windings 52 belonging to different sets carry alternating current at different phases. Therefore, the armature winding set 54 is a three phase armature winding which delivers three phase alternating current (AC) power to an electrical system of the aircraft, also referred to herein as an aircraft power system.

Upon excitation, the field winding set 50 is energized with DC power, but the excitation may be shut down in the event of a winding fault. As alternating current is passed through the three sets of armature windings (i.e., armature winding set 54), a variable magnetic field is generated that is superimposed over the fixed magnetic field resulting from the field winding set 50. The resultant combined magnetic field varies with time, causing the rotor 42 to rotate within the stator 44 as it attempts to bring the rotor teeth 46 to a position of minimum reluctance with respect to the stator teeth 48.

The delivery of three phase AC power is well-suited for commercial aircraft topologies. This is based on the ability to shut down excitation of the field winding set 50 in the event of a fault, as noted above, and based on the simple rotor construction. The machine can be embedded into the low pressure spool 24 and/or the high pressure spool 26 to provide both torque and electrical power. Although it is contemplated that the flux-switching machine 40 may be located anywhere within the engine housing 32, operative coupling to the low pressure spool 24 and/or the high pressure spool 26 are engine components well-suited for location and coupling. The low pressure spool 24 has more power available on the shaft to spin the flux-switching machine 40 as a generator and the high pressure spool 26 has more power available on the shaft for use of the flux-switching machine 40 as a starting motor for the aircraft engine 10.

While a single flux-switching machine 40 is illustrated and described herein, it is to be appreciated that a plurality of identical machines may be employed in conjunction with the aircraft engine 10. Specifically, multiple machines may be partially or fully embedded within the engine housing 32.

Advantageously, embedding the flux-switching machine 40 within the engine housing 32 allows removal of an engine gearbox and drive train that are otherwise necessary. The flux-switching machine 40 can be installed in any area of the engine core, thereby simplifying the engine package. The output of the flux-switching machine 40 is three phase AC power, limiting the required power electronics. The rotor is of a simple construction which is cost effective. The three phase armature windings are inherently segregated from each other and the machine is fault tolerant. As described in detail above, the excitation can be cut off from the flux-switching machine 40 to isolate a fault. The output is fully controlled by the field winding set 50 which does not affect the output waveform, only the power output level. Finally, the flux-switching machine 40 has a high power density.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An aircraft engine assembly comprising:
an engine housing (32);
a low pressure spool (24) disposed within the engine housing;
a high pressure spool (26) disposed within the engine housing; and
a flux-switching machine (40) disposed within the engine housing, the flux-switching machine comprising a rotor (42), a stator (44), a field winding (50) and an armature winding (52), the flux-switching machine configured to generate power for an aircraft power system that powers an aircraft engine;
**characterised in that** the flux-switching machine comprises a three phase electric machine having a three phase armature winding, and wherein the flux-switching machine is an electric starter for the aircraft engine.

2. The aircraft engine of claim 1, wherein the flux-switching machine is operatively coupled to the low pressure spool.

3. The aircraft engine of claim 1, wherein the flux-switching machine is operatively coupled to the high pressure spool.

4. The aircraft engine of any preceding claim, wherein the flux-switching machine is entirely disposed within the engine housing.

5. The aircraft engine of any preceding claim, further comprising a plurality of flux-switching machines disposed within the engine housing.

6. The aircraft engine of claim 5, wherein all of the plurality of flux-switching machines are disposed entirely within the engine housing.

7. A method of generating electric energy for an aircraft power system comprising:
energizing a field winding set of a flux-switching machine disposed entirely within an engine housing of an aircraft engine, wherein the flux-switching machine comprises a three phase electric machine having a three phase armature winding, and wherein the flux-switching machine is an electric starter for the aircraft engine; and
outputting electrical energy to the aircraft power system of an aircraft with the three phase armature winding of the flux-switching machine to provide electrical power for the aircraft power system that powers the aircraft engine and torque for starting or assisting the aircraft engine.

8. The method of claim 7, further comprising generating electric energy with a plurality of flux-switching machines disposed entirely within the engine housing of the aircraft engine.

9. The method of claim 7, wherein at least one aircraft engine component comprises a low pressure spool.

10. The method of claim 7, wherein at least one aircraft engine component comprises a high pressure spool.

11. The method of claim 7, wherein at least one aircraft engine component comprises an intermediate pressure spool.

## Patentansprüche

1. Luftfahrzeugantriebsanordnung, umfassend:
ein Antriebsgehäuse (32);
eine Niedrigdruckspule (24), die in dem Antriebsgehäuse angeordnet ist;
eine Hochdruckspule (26), die in dem Antriebsgehäuse angeordnet ist; und
eine Flussschwingmaschine (40), die in dem Antriebsgehäuse angeordnet ist, wobei die Flussschwingmaschine einen Rotor (42), einen Stator (44), eine Feldwicklung (50) und eine Ankerwicklung (52) umfasst, wobei die Flussschwingmaschine konfiguriert ist, um Versorgung für ein Luftfahrzeugversorgungssystem, das einen Luftfahrzeugantrieb versorgt, zu erzeugen;
**dadurch gekennzeichnet, dass** die Flussschwingmaschine eine dreiphasige elektrische Maschine umfasst, die eine dreiphasige Ankerwicklung aufweist, und wobei die Flussschwingmaschine ein elektrischer Anlasser für den Luftfahrzeugantrieb ist.

2. Luftfahrzeugantrieb nach Anspruch 1, wobei die Flussschwingmaschine mit der Niedrigdruckspule wirkverbunden ist.

3. Luftfahrzeugantrieb nach Anspruch 1, wobei die Flussschwingmaschine mit der Hochdruckspule wirkverbunden ist.

4. Luftfahrzeugantrieb nach einem vorhergehenden Anspruch, wobei die Flussschwingmaschine vollständig in dem Antriebsgehäuse angeordnet ist.

5. Luftfahrzeugantrieb nach einem vorhergehenden Anspruch, ferner umfassend eine Vielzahl von Flussschwingmaschinen, die in dem Antriebsgehäuse angeordnet sind.

6. Luftfahrzeugantrieb nach Anspruch 5, wobei alle aus der Vielzahl von Flussschwingmaschinen vollständig in dem Antriebsgehäuse angeordnet sind.

7. Verfahren zur Erzeugung elektrischer Energie für ein Luftfahrzeugversorgungssystem, umfassend:
Aktivieren eines Feldwicklungssatzes einer Flussschwingmaschine, die vollständig in einem Antriebsgehäuse eines Luftfahrzeugantriebs angeordnet ist, wobei die Flussschwingmaschine eine dreiphasige elektrische Maschine umfasst, die eine dreiphasige Ankerwicklung aufweist, und wobei die Flussschwingmaschine ein elektrischer Anlasser für den Luftfahrzeugantrieb ist; und
Ausgeben elektrischer Energie an das Luftfahrzeugversorgungssystem eines Luftfahrzeugs mit der dreiphasigen Ankerwicklung der Flussschwingmaschine zum Bereitstellen elektrischer Versorgung für das Luftfahrzeugversorgungssystem, das den Luftfahrzeugantrieb und das Drehmoment zum Starten oder Stützen des Luftfahrzeugantriebs versorgt.

8. Verfahren nach Anspruch 7, ferner umfassend das Erzeugen elektrischer Energie mit einer Vielzahl von Flussschwingmaschinen, die vollständig in dem Antriebsgehäuse des Luftfahrzeugantriebs angeordnet sind.

9. Verfahren nach Anspruch 7, wobei mindestens eine Luftfahrzeugantriebskomponente eine Niedrigdruckspule umfasst.

10. Verfahren nach Anspruch 7, wobei mindestens eine Luftfahrzeugantriebskomponente eine Hochdruckspule umfasst.

11. Verfahren nach Anspruch 7, wobei mindestens eine Luftfahrzeugantriebskomponente eine Zwischendruckspule umfasst.

## Revendications

1. Ensemble moteur d'aéronef comprenant :
un compartiment réacteur (32) ;
un corps basse pression (24) disposé à l'intérieur du compartiment réacteur ;
un corps haute pression (26) disposé à l'intérieur du compartiment réacteur ; et
une machine de commutation de flux (40) disposée à l'intérieur du compartiment réacteur, la machine de commutation de flux comprenant un rotor (42), un stator (44), un enroulement inducteur (50) et un enroulement d'induit (52), la machine de commutation de flux étant configurée pour générer de l'énergie pour un système d'alimentation d'avion qui alimente un moteur d'aéronef ;
**caractérisé en ce que** la machine de commutation de flux comprend une machine électrique triphasée présentant un enroulement d'induit triphasé, et dans lequel la machine de commutation de flux est un démarreur électrique pour le moteur d'aéronef.

2. Moteur d'aéronef selon la revendication 1, dans lequel la machine de commutation de flux est couplée de manière fonctionnelle au corps basse pression.

3. Moteur d'aéronef selon la revendication 1, dans lequel la machine de commutation de flux est couplée de manière fonctionnelle au corps haute pression.

4. Moteur d'aéronef selon l'une quelconque des revendications précédentes, dans lequel la machine de commutation de flux est entièrement disposée à l'intérieur du compartiment réacteur.

5. Moteur d'aéronef selon l'une quelconque des revendications précédentes, comprenant en outre une pluralité de machines de commutation de flux disposée à l'intérieur du compartiment réacteur.

6. Moteur d'aéronef selon la revendication 5, dans lequel tous les éléments de la pluralité de machines de commutation de flux sont entièrement disposés à l'intérieur du compartiment réacteur.

7. Procédé de génération d'énergie électrique pour un système d'alimentation d'avion consistant à :
mettre sous tension un jeu d'enroulements inducteurs d'une machine de commutation de flux entièrement disposée à l'intérieur d'un compartiment réacteur d'un moteur d'aéronef, dans lequel la machine de commutation de flux comprend une machine électrique triphasée ayant un enroulement d'induit triphasé, et dans lequel la machine de commutation de flux est un démarreur électrique pour le moteur d'aéronef ; et
délivrer en sortie une énergie électrique au système d'alimentation d'avion d'un aéronef avec l'enroulement d'induit triphasé de la machine de commutation de flux pour fournir une alimentation électrique au système d'alimentation d'avion qui alimente le moteur d'avion et au couple pour démarrer ou assister le moteur d'aéronef.

8. Procédé selon la revendication 7, comprenant en outre la génération d'énergie électrique avec une pluralité de machines de commutation de flux entièrement disposée à l'intérieur du compartiment réacteur du moteur d'aéronef.

9. Procédé selon la revendication 7, dans lequel au moins un élément moteur d'aéronef comprend un corps basse pression.

10. Procédé selon la revendication 7, dans lequel au moins un élément moteur d'aéronef comprend un corps haute pression.

11. Procédé selon la revendication 7, dans lequel au moins un élément moteur d'aéronef comprend un corps de pression intermédiaire.
